# EUROPÄISCHE PATENTANMELDUNG

(11) **EP 1 704 901 A1**
(43) Veröffentlichungstag der Anmeldung: **27.09.2006**
(21) Anmeldenummer: 06005725.4
(22) Anmeldetag: 21.03.2006
(51) Int. Cl.: A63C 17/01, A63C 17/26

(54) **Roller**

(30) Priorität: 26.03.2005 DE 102005013992; 26.03.2005 DE 202005004884 U
(71) Anmelder: Derksen, Dieter, 30559 Hannover (DE)
(72) Erfinder: Derksen, Dieter, 30559 Hannover (DE)
(74) Vertreter: Junius, Walther

(57) **Zusammenfassung**

Die Erfindung betrifft einen Roller, bestehend aus einem Trittbrett, einer Handstütze und am Trittbrett angeordneten Rollen, bei dem der Rollerfahrer auf dem Trittbrett mit einem Fuß steht und sich mit dem anderen Fuß auf dem Boden abstößt. Es ist die Aufgabe der Erfindung, einen einfach aufgebauten und kostengünstig herzustellenden Roller bereit zu stellen, auf dem auch Gepäck sicher zu transportieren ist, ohne dass die Fahreigenschaften oder die Ausmaße des Rollers wesentlich verändert werden müssen. Die Erfindung besteht darin, dass die Handstütze derart am Trittbrett feststehend und unverschwenkbar angeordnet ist, dass sie das Trittbrett (in Fahrtrichtung gesehen) in einen hinter der Handstütze liegenden längeren Fußstandbereich und einen vor der Handstütze liegenden kürzeren Gepäckablagebereich unterteilt. Die Unterteilung in einen Fußstandbereich und einen Gepäckablagebereich gestattet es dem Rollerfahrer, meist einem Schüler, sein oftmals schweres Gepäck, die Schultasche, nicht tragen zu müssen und sich mit seinem Gepäck, ohne dieses selbst tragen zu müssen, schnell fortbewegen zu können. Hierbei werden gesundheitliche Schäden durch das Tragen von zu schwerem Gepäck über weite Wege vermieden oder zumindest vermindert. Zur Raumersparnis sind die Teile des Rollers zusammenklappbar.

## Beschreibung

Die Erfindung betrifft einen Roller, der aus einem Trittbrett, einer Handstütze und am oder unter dem Trittbrett angeordneten Rollen bzw. Rädern besteht, bei dem der Rollerfahrer auf dem Trittbrett mit einem Fuß steht und sich mit dem anderen Fuß auf dem Boden bzw. auf der Fahrbahn abstößt.

Roller sind allgemein bekannt. Roller weisen zwei oder bei Rollern für Kleinkinder auch drei Räder auf. Ein Rad ist vorne unter dem Lenker angebracht, das zweite mittig im hinteren Bereich des Trittbretts meist am Ende des. Trittbrettes angeordnet. Bei Rollern für Kleinkinder sind am Ende des Trittbrettes zwei Räder zu beiden Seiten des Trittbrettes angebracht. Der Lenker besteht aus einer verschwenkbaren vertikalen Stange mit einer am oberen Ende angebrachten Querstange, die an ihren Enden Handgriffe trägt. Der Lenker und die Querstange bilden eine Handstütze. An dieser Lenkstange ist der vordere Teil des Trittbretts drehbar gelagert. So kann der Fahrer des Rollers durch Drehung der Lenkstange und somit der Drehung des an der Lenkstange angeordneten Rades die zu fahrende Richtung bestimmen. Das Trittbrett hat eine längliche Form und weist eine Breite auf, die das Aufstellen eines menschlichen Fußes auf das Brett erlaubt und mit dem zweiten Fuß durch Abstoßen vom Boden Schwung geholt werden kann.

Roller mit und ohne Tretantrieb werden vorwiegend von Kindern und Jugendlichen zum schnellen Fortkommen anstelle eines Fahrrades oder anstelle des zu Fußgehens benutzt. Besonders auf dem Schulweg, sei es bis zum Schulbus oder zur Schule selber, wird der Tretroller gerne als Fortbewegungsmittel eingesetzt. Das Fahren macht den Kindern Spaß und der Roller kann aufgrund seiner geringen Ausmaße mit in den Schulbus genommen werden und steht so nach Ausstieg aus dem Bus wieder zur Verfügung. Die Kinder tragen beim Rollerfahren ihren Schulranzen auf dem Rücken. Auch von Erwachsenen wird ein Tretroller gern benutzt, um z.B. in Messehallen Entfernungen schnell zu überwinden.

Nachteilig ist aber, dass der Roller ebenso wie der Tretroller nicht dazu geeignet ist, Gepäck, sei es beispielsweise einen Schulranzen oder eine Einkaufstasche, transportieren zu können. Das Gepäck muß bei Gebrauch des Rollers am Körper getragen werden. Gerade Kinder, die sich auf dem Schulweg befinden, müssen ihren Schulranzen, der heutzutage bis zu 10 kg wiegen kann, auf dem Rücken tragen. Das ist unbequem und kann zu Schäden am Skelett des Kindes führen.

Die Erfindung vermeidet die Nachteile des Standes der Technik. Es ist die Aufgabe der Erfindung, einen einfach aufgebauten und kostengünstig herzustellenden Tretroller bereit zu stellen, auf dem auch Gepäck sicher zu transportieren ist, ohne dass die Fahreigenschaften oder die Ausmaße des Rollers wesentlich verändert werden müssen.

Die Erfindung besteht darin, dass die Handstütze derart am Trittbrett feststehend und unverschwenkbar angeordnet ist, dass sie das Trittbrett (in Fahrtrichtung gesehen) in einen hinter der Handstütze liegenden längeren Fußstandbereich und einen vor der Handstütze liegenden kürzeren Gepäckablagebereich unterteilt.

Hierbei ist die Handstütze ein T-förmiges Gebilde, das ähnlich einem Lenker bei einem herkömmlichen Roller vertikal und genähert senkrecht zum Trittbrett angeordnet ist, aber undrehbar ist. Die Unterteilung in einen Fußstandbereich und einen Gepäckablagebereich gestattet es dem Rollerfahrer, meist einem Schüler, sein oftmals schweres Gepäck, die Schultasche, nicht tragen zu müssen und sich mit seinem Gepäck, ohne dieses selbst tragen zu müssen, schnell fortbewegen zu können. Hierbei werden gesundheitliche Schäden durch das Tragen von zu schwerem Gepäck über weite Wege vermieden oder zumindest vermindert. Besteht das Gepäck des Rollerfahrers aus einem Schulranzen, der bei einem herkömmlichen Roller auf dem Rücken verbleiben muß und das Halten des Gleichgewichtes beim Rollerfahren ungünstig beeinflusst, so tritt dieser Nachteil beim erfindungsgemäßen Roller nicht auf. Besteht das Gepäck aus einer von Hand zu tragenden Schultasche, so kann diese vom Rollerfahrer mit einem herkömmlichen Roller überhaupt nicht transportiert werden, weil mit einer solchen Tasche das Gleichgewicht nicht zu halten ist, wohl aber mit dem erfindungsgemäßen Roller.

Der Gepäckablagebereich hat eine Breite, die in etwa der Breite des zu transportierenden Gepäckstückes entspricht, also bei einem Schüler die Breite der Schultasche oder des Ranzens. Der Fußstandbereich sollte eine Breite haben, die es dem Rollerfahrer erlaubt, mit beiden Füßen auf dem Fußstandbereich des Trittbrettes zu stehen. Denn der Rollerfahrer muß durch Wahl des Fußes, mit dem er sich auf der Fahrbahn abstößt, seine Fahrtrichtung korrigieren und ändern.

Denn dieser Roller weist keinen verschwenkbaren, die Fahrtrichtung bestimmenden Lenker auf, sondern anstelle der Räder verschwenkbare Rollen unter dem Trittbrett, die durch den vom Rollerfahrer erzeugten seitlichen Druck auf das Trittbrett verschwenkt werden, wodurch die Fahrtrichtung korrigiert und eingestellt wird. Lediglich die am Ende des Trittbrettes an oder unter diesem angeordneten Rollen sind nicht verschwenkbar.

Von den verschwenkbaren Rollen ist eine ganz vorn unter der Gepäckablage angeordnet die übrigen sind jeweils paarweise nebeneinander unter dem Trittbrett angeordnet. Diese paarweise Anordnung bringt für den Roller eine erhebliche Standsicherheit gegen seitliches Umfallen, so dass der Rollerfahrer bei Nichtbenutzung des Rollers diesen mitsamt Gepäck stehen lassen kann, ohne ein Umfallen des Rollers befürchten zu müssen.

Hierdurch ist es ermöglicht, dass der Rollerfahrer den Roller frei von auf seinem Rücken aufgeschnalltem oder in einer Hand gehaltenem Gepäck benutzt, aber trotzdem das Gepäck transportiern kann, weil das Gepäck während der Fahrt auf dem vor der Handstütze befindlichen Ablagebereich abgestellt ist. Somit brauchen beispielsweise die Schulkinder ihren schweren Schulranzen nicht auf dem Rücken zu tragen, sondern können diesen zur Schonung des Rückens auf dem Roller auf der neu geschaffenen, gesonderten Ablagefläche abstellen. Die Leichtgängigkeit des Rollers und dessen flexible Handhabe bleibt durch die geringe Größe des Rollers erhalten. Besonders vorteilhaft ist, dass durch die durch die Handhaltevorrichtung getrennten Bereiche der Gepäckablage und des Fußbereiches die Fahrqualität für den Rollerfahrer erhalten bleibt. Denn das abgestellte Gepäck behindert ihn durch die separierte Flächenaufteilung des Trittbrettes vor und hinter der Handstütze nicht.

Der Roller ist besonders dann stabil und einfach aufgebaut, wenn das untere Ende der Handhaltevorrichtung drehfest an dem Trittbrett angeordnet ist, wenn unter dem Fußstandbereich vorne mindestens zwei verschwenkbare und hinten zwei feststehende, in Fahrtrichtung ausgerichtete Rollen angeordnet sind, wobei diese Rollen auf einer senkrecht (gedachten) Achse zur Fahrtrichtung liegen und wenn mindestens eine frei drehbar angelenkte Rolle, die um eine senkrecht zur Standfläche des Trittbretts angeordnete Achse drehbar ist, im vorderen Bereich des Trittbretts unter diesem angeordnet ist. Somit weist der Roller mindestens vier Rollen auf, die derart angeordnet sind, dass der Roller auch im Stand nicht umkippen kann. Die Handstütze ist nur am Trittbrett angeordnet und weist keine Verbindung zur verschwenkbar gelagerten vorderen Rolle auf. Die Fahrtrichtung des Rollers wird durch Anschub aus definierter Richtung und der einhergehenden Gewichtsverlagerung bestimmt. Soll der Roller nach links fahren, ist rechterhand vom Roller Anschwung zu geben. Soll der Roller nach rechts fahren, ist linkerhand vom Roller Anschwung zu geben. Aufgrund der Schwungrichtung wird die vordere verschwenkbar gelagerte Rolle in die gewünschte Fahrtrichtung positioniert, während die beiden hinteren, feststehenden Rollen die Spur halten. Die Handstütze dient nicht zur aktiven Richtungsgebung, sondern lediglich als Festhaltevorrichtung.

Es ist daher zweckmäßig, wenn das Trittbrett eine Breite aufweist, die das nebeneinander Aufstellen von beiden Füßen auf das Trittbrett erlaubt.

Das Fahren des Rollers wird besonders leicht und stabil, wenn das mitzuführende Gepäckstück sich fest auf bzw. an dem Roller befestigen lässt. Das kann bei dem erfindungsgemäßen Roller dadurch erfolgen, dass mindestens eine Befestigungsvorrichtung für das mitzuführende Gepäck an der Handstütze vorgesehen ist. Diese Befestigungsvorrichtung kann ein einfacher Haken sein, in den man den Handgriff der von Hand zu tragenden Tasche einhängt, wenn diese auf den Gepäckablagebereich gestellt wird, dieses kann ein Doppelhaken oder Hakenpaar sein, in den man die beiden Traggurte eines Tornisters hängt.
Derartige Haken können auch übereinander für verschieden hohe Gepäckstücke sein, wobei es wichtig ist, dass das Gepäckstück mit seiner Unterseite auf dem Gepäckablagebereich des Trittbrettes fest aufsteht und mit seiner Oberseite an der Handstütze befestigt ist.

Besonders handlich und benutzungsfreundlich wird dieser Roller, wenn das Trittbrett aus zwei separaten Teilen besteht, nämlich aus dem Fußstandbereich und dem Gepäckablagebereich, die durch ein feststellbares Gelenk miteinander klappbar verbunden sind. Dann kann der Fußstandbereich, wenn man nicht mehr rollern will, sondern beispielsweise mit einem öffentlichen Verkehrsmittel weiterfahren will, hoch und gegen die Handstütze geklappt werden, so dass der so zusammengeklappte Roller sehr wenig Raum einnimmt.

Das Gelenk hat zweckmäßigerweise einen Verschwenkbereich von ca. 90° und eventuell an den Enden Einrastmittel, die geeignet sind, die beiden Endstellungen sicher zu arretieren.

Eine weitere Möglichkeit der Raumersparnis besteht darin, dass ein drittes Teil zwischen den beiden Teilen des Trittbrettes angeordnet ist, an dem die Handstütze befestigt ist. Zwischen diesen drei Teilen sind zwei in ihren Endstellungen fest einrastbare Gelenke angeordnet. Dadurch lässt sich der Roller ganz flach zusammenlegen.

Dieser dritte mittige Teil des Trittbrettes kann aber auch Träger eines Paares von verschwenkbaren Rollen sein, so dass der mit Gepäck beladene Roller bei hochgeklapptem Fußstandbereich (für den Transport in einem öffentlichen Verkehrsmittel) nur wenig breiter als das Gepäckstück ist.

Dieser Roller lässt sich auch wie ein hinter einer Person herziehbarer zweirädriger Gepäcktransportwagen benutzen, wenn unter dem dritten Teil des Trittbrettes oder unter der Vorderkante des Fußstandbereiches des Trittbrettes zwei Rollen angeordnet sind.

Wichtig für diesen Roller ist eine ausreichende Stabilität der Handstütze, die sich dadurch erreichen lässt, dass die Handstütze aus drei in einem Punkt vereinigten Schenkeln besteht, von denen zwei nach unten gerichtete Schenkel an den beiden Längsseiten des Trittbrettes befestigt sind und der dritte nach oben ragende Schenkel durch eine an seinem freien Ende mittig an ihm angebrachte Querstange beendet ist, die an ihren freien Enden Handgriffe trägt.

Dabei kann die Konstruktion so erfolgen, dass die Schenkel der Handstütze an ihren nach oben gerichteten Enden eine rohrförmige Halterung tragen, in der der dritte Schenkel verstellbar oder verschiebbar und feststellbar gelagert ist.

Damit der Roller leicht ist und auch von jüngeren Schülern, die einen Teil ihres Schulweges mit öffentlichen Transportmitteln zurückzulegen haben, leicht zu tragen und zu handhaben ist, ist es zweckmäßig, dass die Metallteile des Rollers überwiegend aus Aluminium hergestellt sind und das Trittbrett vorzugsweise aus kunststoffgebundenen Holzwerkstoffplatten oder Aluminiumblech.

Das Wesen der Erfindung ist anhand von in der Zeichnung schematisch dargestellten.Ausführungsbeispielen näher erläutert. Es zeigen:
- Fig. 1: einen fahrbereiten Roller in Seitenansicht
- Fig. 2: eine Aufsicht auf ein Trittbrett mit einer Rollenanordnung
- Fig. 3: eine Aufsicht auf ein Trittbrett mit einer weiteren Rollenanordnung
- Fig. 4: einen fahrbereiten Roller in Frontansicht
- Fig. 5: den Roller in zusammengeklapptem Zustand.
- Fig. 6: eine perspektivische seitliche Ansicht von vorn.
- Fig. 7: eine perspektivische seitliche Ansicht von hinten.
- Fig. 8: einen Roller, den man auch hinter sich herziehen kann.

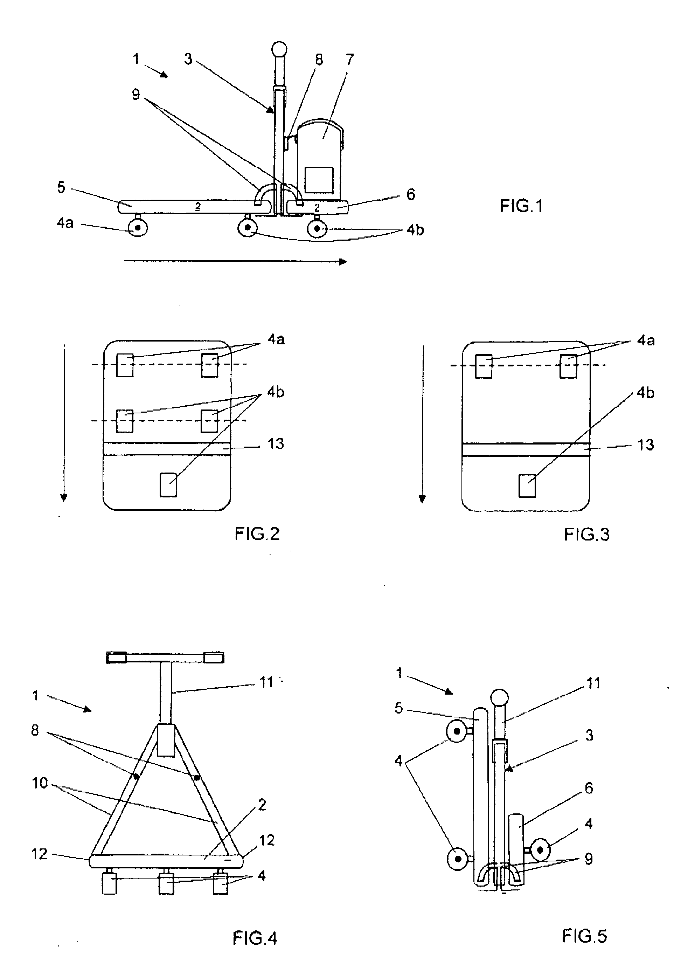

Die Fig. 1 zeigt einen fahrbereiten Roller 1 in Seitenansicht. Der Roller 1 besteht aus einem Trittbrett 2, einer Handstütze 3 und Rollen 4. Die Rollen 4 können auch Räder sein. Die Handstütze 3 ist am Trittbrett 2 angeordnet, ohne mit einer oder mehreren Rollen in Kontakt zu stehen. Die Handstütze 3 ist derart an dem Trittbrett 2 angeordnet, dass das Trittbrett 2 in einen in Fahrrichtung (durch einen Pfeil angezeigt) hinter der Handstütze 3 liegenden Fußstandbereich 5 und einen vor der Handstütze 3 liegenden Gepäckablagebereich 6 unterteilt ist. Auf dem Gepäckablagebereich 6 kann das Gepäck, hier ein Schulranzen, abgestellt werden. An der Handstütze 3 sind Haken 8 als Befestigungsmittel vorgesehen, an denen der Schulranzen anzu hängen ist. Das Trittbrett 2 hat die Form eines Rechtecks. Die Ecken sind aus Sicherheitsgründen abgerundet. Es sind sämtliche weitere Formen des Trittbretts denkbar, die das Abstellen eines Gepäckstückes und das Aufstellen zweier Füße erlauben. Der Fußbereich 5 und der Gepäckablagebereich 6 sind durch feststellbare Gelenke 9 an der Handstütze 3 angelenkt, Durch eine Feststellvorrichtung an den rastfähigen Gelenken werden die beiden Teile 6,7 des Trittbretts 2 in fahrbereiter Position gehalten.

Bei dem Roller der Fig.1 sind unter dem Trittbrett 2 fünf Rollen befestigt. Die Fig. 2 zeigt eine solche Rollenanordnung. An der Unterseite des Fußbereiches 5 sind vier Rollen angeordnet, unter dem Gepäckablagebereich 6 ist mittig eine Rolle angeordnet. Die beiden hinteren Rollen sind in Fahrtrichtung ausgerichtete feststehende unverschwenkbare Rollen, während die übrigen drei Rollen um eine vertikale Achse verschwenkbar gelagert sind.
Somit dienen die hinteren, auf einer gedachten, senkrecht zur Fahrtrichtung verlaufenden Achse (gestrichelte Linie) liegenden zwei unverschwenkbaren Rollen zur Spurführung, während die übrigen drei drehbar gelagerten Rollen in Richtung des Fahrtweges ausrichtbar sind. Diese Ausrichtung erfolgt durch richtungsdefiniertes Schwungholen.

Zwei der drei verschwenkbar gelagerten Rollen liegen auf einer (gedachten) Achse, die parallel zur ersten Achse der unverschwenkbar feststehenden Rollen verläuft.

In Fig. 3 ist eine andere Rollenanordnung dargestellt. Die beiden hinteren Rollen sind wie in Fig. 2 beschrieben, feststehende unverschwenkbare Rollen. Anders als in Fig. 2 ist nur eine um eine vertikale Achse drehbare Rolle angeordnet, die sich mittig unter dem Gepäckablagebereich 6 befindet.

Die Fig. 4 zeigt die Frontansicht eines erfindungsgemäßen Rollers 1 der Fig. 1-3. Die Handstütze 3 besteht aus einem umgedrehten V und aus einer T-förmigen Griffstange 11, wobei die freien Enden der Schenkel 10 des V-förmigen Unterteiles an beiden Längsseiten 11 des Trittbrettes 2 befestigt sind und die Griffstange 11 am Scheitel des V-förmigen Unterteiles höhenverstellbar angeordnet ist. Die Griffstange weist an den beiden Enden des waagerechten Bereiches Griffe auf.

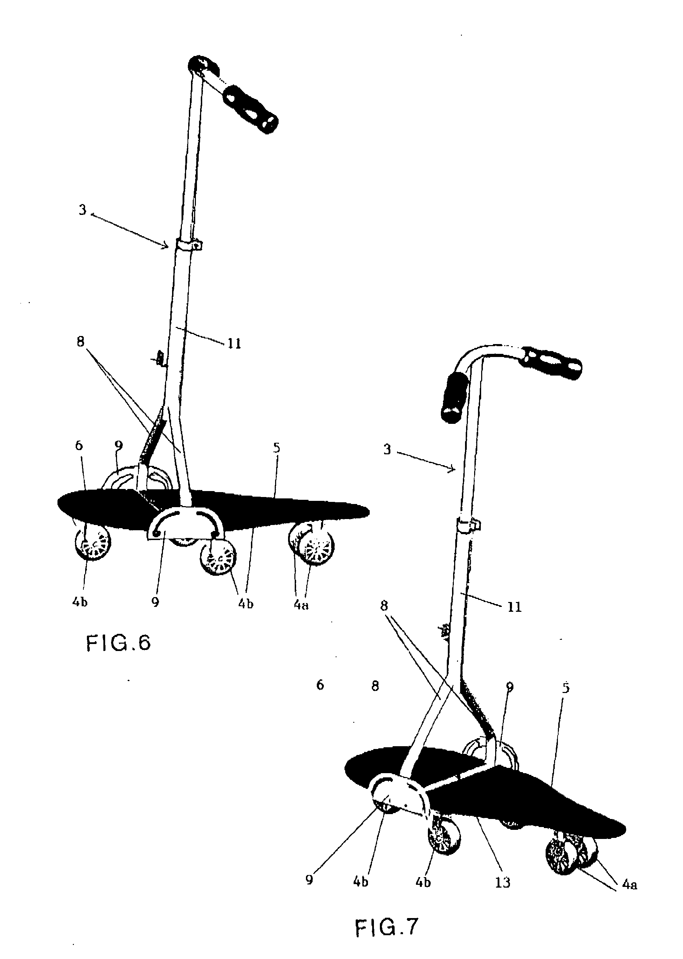

Die Fig. 5 zeigt eine Seitenansicht des Rollers 1 der Fig. 1 - 4 in zusammengeklapptem Zustand. An den Gelenken 9 sind der Gepäckablagebereich 6 und der Fußbereich 5 in Richtung der Griffstange 11 zusammenklappbar. So stellt der Roller 1 eine schmale Anordnung aus parallel nebeneinander liegendem Fußbereich 5, Handstütze 3 und Gepäckablagebereich 6 dar.

Die Fig. 6+7 zeigen einen startbereiten Roller in perspektivischer startbereiter Stellung. Dieser Roller weist fünf Rollen 4 auf, eine verschwenkbare an der Front, zwei verschwenkbare an der Vorderseite des Fußbereiches 5 und zwei unverschwenkbare am Ende des Fußbereiches 5. Die Rollen 4b an der Vorderseite des Fußbereiches 5 können bei hochgeklapptem und an der Handstütze 3 anliegendem Fußbereich 5 die Arbeit der Räder eines zweirädigen gezogenen Gepäcktransporters übernehmen, weil die Handstütze 3 sich beim Ziehen in einer Schräglage befindet, bei der die verschwenkbaren Rollen 4b mit ihrer Oberfläche auf der Fahrbahn befindlich sind.

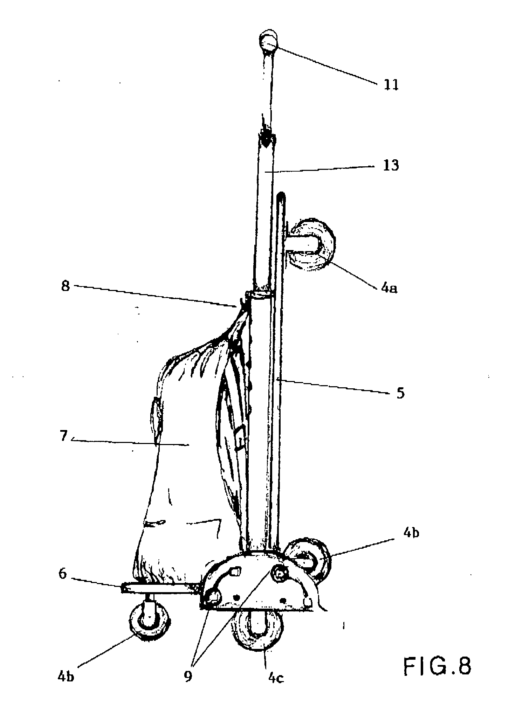

Fig. 8 zeigt einen Roller mit hochgeklapptem Fußbereich 5, den man auch hinter sich herziehen kann und mit dem man auch Treppen steigen kann. Dieser Roller weist zusätzlich ein Rollenpaar 4c unter dem mittleren Teil 13 des Trittbrettes auf. Dieses Rollenpaar 4c läuft die schräggestellter Handstütze auf dem Boden, das vordere Rollenpaar ist vom Boden abgehoben und das Rollenpaar 4b wird beim Treppensteigen wirksam, indem es an der Setzstufe entlang fährt.

Aus Gründen der Gewichtserspamis ist es zweckmäßg, dass der Fußstandbereich (5) des Trittbrettes 2 in seinem hinteren Teil schmaler als in seinem vorderen Teil ist, während die größere Breite des vorderen Teiles die Standsicherheit des Rollers erhöht.

### Liste der Bezugszeichen

- 1: Roller
- 2: Trittbrett
- 3: Handstütze
- 4: Rolle
- 4a: unverschwenkbar angebrachte Rolle
- 4b: verschwenkbar angebrachte Rolle
- 5: Fußstandbereich
- 6: Gepäckablagebereich
- 7: Gepäck
- 8: Haken
- 9: Gelenk
- 10: Schenkel
- 11: Griffstange
- 12: Längsseite des Trittbrettes
- 13: Mittiger Bereich des Trittbrettes

## Patentansprüche

1. Roller,
bestehend aus einem Trittbrett, einer Handstütze und am Trittbrett angeordneten Rollen,
bei dem der Rollerfahrer auf dem Trittbrett mit einem Fuß steht und sich mit dem anderen Fuß auf dem Boden abstößt,
**dadurch gekennzeichnet,**
**dass** die Handstütze (3) derart am Trittbrett (2) angeordnet ist,
**dass** sie das Trittbrett (2) (in Fahrtrichtung gesehen) in einen hinter der Handstütze (3) liegenden längeren Fußstandbereich (5) und einen vor der Handstütze (3) liegenden kürzeren Gepäckablagebereich (6) unterteilt.

2. Roller nach Anspruch 1,
**dadurch gekennzeichnet,**
**dass** zumindest ein Teil der Rollen (4) allseitig dreh- und verschwenkbar unter dem Trittbrett (2) angeordnet ist.

3. Roller nach Anspruch 1,
**dadurch gekennzeichnet,**
**dass** die Handstütze (3) fest und nicht drehbar an dem Trittbrett (2) angeordnet ist,
**dass** an oder unter dem Fußstandbereich (5) mindestens zwei unverschwenkbare, in Längsrichtung des Trittbrettes (2) ausgerichtete Rollen (4a), vorzugsweise hinten, angeordnet sind
und **dass** mindestens eine dreh- und verschwenkbare Rolle (4a) im vorderen Bereich des Trittbrettes (2) angeordnet ist.

4. Roller nach Anspruch 1,
**dadurch gekennzeichnet,**
**dass** mindestens eine Befestigungsvorrichtung (8) für das mitzuführende Gepäck an der Handstütze vorgesehen ist.

5. Roller nach Anspruch 1,
**dadurch gekennzeichnet,**
**dass** das Trittbrett (2) aus zwei separaten Teilen besteht, nämlich aus dem Fußstandbereich (5) und dem Gepäckablagebereich (6), die durch ein feststellbares Gelenk (9) miteinander verbunden sind.

6. Roller nach Anspruch 5,
**dadurch gekennzeichnet,**
**dass** ein drittes Teil (13) zwischen den beiden Teilen (5,6) des Trittbrettes (2) angeordnet ist, an dem die Handstütze (3) befestigt ist.

7. Roller nach Anspruch 6,
**dadurch gekennzeichnet,**
**dass** für die Benutzung dieses Rollers als hinter einer Person herziehbarer Gepäckwagen unter dem dritten Teil (13) des Trittbrettes (2) zwei Rollen angeordnet sind.

8. Roller nach Anspruch 1,
**dadurch gekennzeichnet,**
**dass** die Handstütze (3) aus drei in einem Punkt vereinigten Schenkeln (8,11) besteht, von denen zwei nach unten gerichtete Schenkel (8) an den beiden Längsseiten des Trittbrettes (2) befestigt sind und der dritte nach oben ragende Schenkel (11) durch eine mittig an ihm angebrachte Querstange beendet ist, die an ihren freien Enden Handgriffe trägt.

9. Roller nach Anspruch 8,
**dadurch gekennzeichnet,**
**dass** die Schenkel (8) der Handstütze (3) an ihren nach oben gerichteten Enden eine vorzugsweise rohrförmige Halterung tragen, in der der dritte Schenkel (11) verstellbar oder verschiebbar und feststellbar gelagert ist.

10. Roller nach Anspruch 1,
**dadurch gekennzeichnet,**
**dass** der Fußstandbereich (5) des Trittbrettes (2) zumindest in seinem vorderen Bereich eine Breite hat, die es dem Rollerfahrer erlaubt, mit beiden Füssen auf dem Trittbrett (2) zu stehen.

11. Roller nach Anspruch 10,
**dadurch gekennzeichnet,**
**dass** der Fußstandbereich (5) des Trittbrettes 2 in seinem hinteren Teil schmaler als in seinem vorderen Teil ist.

12. Roller nach Anspruch 1,
**dadurch gekennzeichnet,**
**dass** die Metallteile des Rollers überwiegend aus Aluminium hergestellt sind und das Trittbrett vorzugsweise aus kunststoffgebundenen Holzwerkstoff-Platten.
